(19) Europäisches Patentamt
European Patent Office
Office européen des brevets

(11) **EP 1 927 953 B1**

(12) **FASCICULE DE BREVET EUROPEEN**

(45) Date de publication et mention
de la délivrance du brevet:
**16.05.2018 Bulletin 2018/20**

(51) Int Cl.:
***H04N 5/365*** *(2011.01)*

(21) Numéro de dépôt: **07122021.4**

(22) Date de dépôt: **30.11.2007**

(54) **Correction de bruit dans des images captées par un système à stabilisation inertielle**

Rauschkorrektur in Bildern, die von einem System mit Trägheitsstabilisierung aufgenommen wurden

Noise correction in images captured by a system with inertial stabilisation

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **01.12.2006 FR 0610548**

(43) Date de publication de la demande:
**04.06.2008 Bulletin 2008/23**

(73) Titulaire: **Safran Electronics & Defense**
**92100 Boulogne-Billancourt (FR)**

(72) Inventeurs:
• **Davenel, Arnaud**
**75015, PARIS (FR)**
• **Budin, Joel**
**75015 PARIS (FR)**
• **Broekaert, Michel**
**75015 PARIS (FR)**
• **Guillerm, Quentin**
**75015 PARIS (FR)**

(74) Mandataire: **Cabinet Plasseraud**
**66, rue de la Chaussée d'Antin**
**75440 Paris Cedex 09 (FR)**

(56) Documents cités:
**FR-A- 2 756 129 FR-A- 2 828 315**
**US-B1- 6 714 240**

• **GEMEINER P ET AL: "Motion and Structure Estimation from Vision and Inertial Sensor Data with High Speed CMOS Camera" ROBOTICS AND AUTOMATION, 2005. PROCEEDINGS OF THE 2005 IEEE INTERNATIONAL CONFERENCE ON BARCELONA, SPAIN 18-22 APRIL 2005, PISCATAWAY, NJ, USA,IEEE, 18 avril 2005 (2005-04-18), pages 1853-1858, XP010871827 ISBN: 0-7803-8914-X**
• **HAYAT M M ET AL: "STATISTICAL ALGORITHM FOR NONUNIFORMITY CORRECTION IN FOCAL-PLANE ARRAYS" APPLIED OPTICS, OSA, OPTICAL SOCIETY OF AMERICA, WASHINGTON, DC, US, vol. 38, no. 8, 10 mars 1999 (1999-03-10), pages 772-780, XP001061355 ISSN: 0003-6935**

EP 1 927 953 B1

**Description**

La présente invention concerne un traitement d'images capturées par un dispositif de capture d'images, tel qu'une caméra ou des jumelles par exemple, et plus particulièrement, lorsque l'axe de visée du dispositif de capture d'image est contrôlé par des moyens gyroscopiques qui sont basés sur un référentiel inertiel.

Lorsqu'une caméra est portée par un support en mouvement, comme un homme en marche ou même à l'arrêt, ou encore un véhicule, les images qu'elle capture peuvent présenter des effets visuels nuisibles à la qualité de ces images. En effet, dans un tel cas, l'axe de visée de la caméra est généralement animé de mouvements réguliers ou le plus souvent irréguliers qui peuvent affecter la qualité d'images captées.

Des systèmes de capture d'images sont adaptés pour réduire de tels effets visuels. En effet, certains de ces systèmes stabilisent la ligne de visée en intégrant un module mécanique de stabilisation inertielle dans la caméra ou encore en agençant la caméra sur un module mécanique tel qu'une plateforme qui permet une stabilisation inertielle. La mécanique de ces systèmes peut être commandée en fonction des informations émanant de gyroscopes. Ils permettent donc de stabiliser l'axe de visée d'une caméra dans un référentiel inertiel. Dans un tel contexte, il est alors possible de capter des images de manière complètement indépendante des mouvements irréguliers qui sont imposés au support de la caméra utilisée.

Un tel système de prise de vue basé sur un référentiel inertiel permet de d'éviter de manière efficace les effets visuels dus aux mouvements irréguliers du support de la caméra.

Toutefois, un autre type de perturbation peut affecter une série d'images captées par un tel système de capture d'images inertiel. Une telle perturbation est relative à un bruit spatial. On entend par les termes 'bruit spatial', un décalage indésirable (ou offset) entre les valeurs des pixels d'une même image qui devraient théoriquement être égales, c'est-à-dire dans le cas où les pixels correspondent au même signal d'entrée. Ce type de perturbation peut être lié à des caractéristiques intrinsèques de la caméra considérée.

Une image numérique est représentée par une matrice de pixels, chacun correspondant à un niveau de couleur ou à un niveau de gris de l'image. Une image correspond à une scène captée par une matrice de détecteurs de flux, puis les énergies lumineuses reçues respectivement par ces détecteurs sont transformées en des signaux électriques respectifs.

Les différents détecteurs de la matrice de détecteurs sont en général théoriquement identiques mais, en pratique, ils présentent des différences qui induisent des décalages indésirables, tels que définis ci-dessus, entre différents pixels d'une image captée d'une scène qui correspond à un flux d'entrée qui est identique en tout point de l'image captée, et de ce fait un bruit spatial dans cette image.

Il est possible de corriger un tel bruit spatial en capturant une image d'un corps noir et en calculant sur cette image lesdits décalages indésirables entre les différents pixels respectivement captés par les détecteurs de flux de la matrice, afin de corriger ces décalages sur les prochaines images captées. Toutefois, il convient de noter ici qu'une telle correction d'un bruit spatial requiert une interruption dans la capture d'images en cours.

Or, étant donné que les décalages entre les valeurs des pixels d'une même image, qui sont dus au bruit spatial, peuvent varier au cours du temps, notamment en fonction de la température, il peut être intéressant de réitérer une étape de correction de ces décalages régulièrement au cours de la capture d'images, sans avoir à interrompre l'opération de capture d'images.

De plus, dans le contexte d'un système de capture d'images à stabilisation inertielle, le bruit spatial est une perturbation relativement gênante, puisque les perturbations relatives au mouvement de l'axe de visée sont évitées. Il est donc d'autant plus intéressant dans un tel contexte de pouvoir corriger ce bruit spatial. Le document FR2756129 décrit une caméra comprenant une matrice de détecteurs de flux, un organe déviateur interposé sur le trajet lumineux entre une pupille d'entrée et la matrice de détecteurs, et une unité de commande périodique de l'organe déviateur. La caméra est adaptée pour opérer une fonction de micro-balayage, une fonction de stabilisation et une fonction d'uniformisation de réponse grâce au mouvement de l'organe déviateur. La correction d'uniformisation est réalisée à partir d'une série d'images captées en effectuant un micro-balayage sans tenir compte du biais de l'organe déviateur.

Un deuxième aspect de la présente invention propose un système de capture d'images adapté pour mettre en oeuvre un procédé selon le premier aspect de la présente invention.

Un troisième aspect de la présente invention propose un programme d'ordinateur destiné à être installé dans un système de traitement d'image selon le deuxième aspect de la présente invention, comprenant des instructions aptes à mettre en oeuvre le procédé selon le premier aspect de la présente invention, lors d'une exécution du programme par des moyens de traitement du système de traitement d'image.

La présente invention vise un procédé de traitement d'images selon la revendication 1 et un système de capture d'une série d'images selon la revendication 7 pouvant permettre à remédier aux inconvénients précités.

Un premier aspect de la présente invention propose un procédé de traitement d'images dans un système de capture d'une série d'images d'une scène comprenant un dispositif de capture d'images ayant une matrice de détecteurs de flux orientée selon un axe de visée.

Le dispositif de capture d'images est contrôlé par un module de stabilisation inertielle qui stabilise l'axe de visée du dispositif de capture d'images dans un référentiel inertiel.

Ce procédé est caractérisé en ce que la série d'images est capturée par le dispositif de capture d'images qui est alors animé d'un mouvement défini, cyclique et présentant sur un cycle, au niveau de la matrice des détecteurs de flux, une amplitude de n pixels, n étant un nombre entier supérieur à 2, et inférieur à $n_{max}$, $n_{max}$ étant déterminé de sorte que les images captées au cours d'un cycle présentent une partie majoritairement commune; et

en ce qu'on corrige un bruit spatial relatif aux détecteurs de flux et affectant la partie commune des images précédente et suivante, sur la base du mouvement défini, en fonction d'au moins un décalage déterminé entre une valeur d'un pixel de référence dans la partie commune de l'image précédente et une valeur d'un pixel suivant qui représente un même point de ladite scène que le pixel de référence dans la partie commune de l'image suivante.

On entend ici par 'partie majoritairement commune', une même partie qui se retrouve dans plusieurs images et qui occupe dans ces images une partie majoritaire.

Grâce au fait que, dans un système à stabilisation inertielle, l'axe de visée d'un dispositif de capture d'images est animé d'un mouvement défini, il est alors avantageusement possible de mettre en place une correction de décalage de valeurs de pixels, afin de corriger le bruit spatial, sur la base des images capturées qui se succèdent. Ainsi, il n'est pas requis, pour effectuer une telle correction, d'interrompre la capture d'images en cours.

En introduisant ainsi, une déstabilisation contrôlée des images capturées dans un système à stabilisation inertielle, c'est-à-dire dans lequel les images successives sont initialement stabilisées par des mécanismes du type gyroscopes inertiels, on est alors avantageusement en mesure de déterminer un mouvement défini adapté au besoin de traitement d'images destiné à corriger le bruit spatial. Puis, en conséquence, on peut tirer partie de la connaissance de ce mouvement pour calculer des corrections du bruit spatial.

Par exemple, grâce à ce mouvement défini, il est alors possible d'appliquer de manière optimale un procédé de traitement d'images, tel que celui qui est appliqué dans un contexte de capture d'images par un système de capture d'images qui n'est pas stabilisé de manière inertielle, et qui présente donc des mouvements irréguliers de l'axe de visée induits par le support de ce système, comme décrit dans le document FR 2 828 315. On peut ainsi corriger le bruit spatial, sans interrompre la capture d'images, tout en bénéficiant des avantages fournis par un système de capture d'images à stabilisation inertielle.

Ce mouvement défini est un mouvement cyclique, c'est-à-dire qu'il implique que l'axe de visée est périodiquement orienté selon la même orientation. Ainsi, on est en mesure d'appliquer une correction du bruit spatial qui converge.

Puis, ce mouvement défini présente une amplitude comprise entre un nombre n supérieur à 2, de sorte à permettre de parcourir les pixels voisins autour d'un pixel pour lequel on cherche à corriger la valeur. En outre, cette amplitude du mouvement défini reste inférieure à un nombre maximum qui doit permettre de retrouver dans une série d'images successives captées au cours d'un cycle du mouvement une partie majoritairement commune afin notamment de pouvoir appliquer une correction sur une grande étendue des images.

Un tel mouvement défini peut par exemple correspondre à un cercle présentant un diamètre d'une valeur supérieure ou égale à 3 pixels au niveau de la matrice de détecteurs de flux.

Avantageusement, puisque le mouvement imposé à l'axe de visée est contrôlé, on peut prévoir de déterminer sa vitesse en fonction de la valeur du temps d'intégration des détecteurs de flux de la matrice des détecteurs du dispositif de capture d'images.

On peut également par exemple prévoir que le mouvement défini correspond à une rosace qui décrit plusieurs arcs de cercle ayant des rayons et des centres divers.

Dans un mode de réalisation de la présente invention, on corrige successivement, à partir du décalage déterminé, des valeurs de pixels de la partie commune de l'image précédente et de l'image suivante, en parcourant une chaîne de pixels comprenant, à partir du pixel de référence dans l'image précédente, des pixels qui se correspondent alternativement dans l'image suivante et dans l'image précédente, un pixel de l'image suivante correspondant à un pixel de l'image précédente lorsque lesdits pixels correspondent à un même point de la scène capturée, et un pixel de l'image précédente correspondant à un pixel de l'image suivante lorsque lesdits pixels correspondent au même détecteur de flux de la matrice de détecteurs.

Ainsi, il peut être avantageux de déterminer la position du pixel de référence dans la partie commune en fonction du mouvement défini et d'une période de temps écoulée entre les images capturées. En effet, en fonction de la position du pixel de référence choisi, et du mouvement défini en découle un sens de parcours des images par la chaîne de pixels de correction. Il est donc avantageux de choisir un pixel qui permette d'obtenir une longue chaîne de pixels.

Dans un mode de réalisation de la présente invention, puisque le mouvement qui anime l'axe de visée est défini, on peut prévoir de corriger le bruit spatial par application d'un mouvement inverse au mouvement défini aux images successivement capturées, de façon à contrebalancer le mouvement de l'axe de visée et ainsi permettre de recaler les images correctement. La position du pixel suivant dans l'image suivante peut alors être déterminée à partir de la position du pixel de référence dans l'image précédente en fonction des caractéristiques du mouvement défini appliqué à l'axe de visée et d'une période de temps écoulée entre des images successives. Puis, on peut procéder ainsi tout au long de la chaîne de pixels de correction.

Toutefois, même dans le cas où le mouvement imposé à l'axe de visée est théoriquement connu avec une grande précision, il est possible que ce mouvement soit entaché de bruit en pratique. Dans un tel cas, il peut alors être intéressant de mettre en place un procédé de traitement d'images numériques permettant de déterminer exactement le mouvement des mêmes points de la scène d'une image précédente à une image suivante.

A cet effet, il peut être avantageux de mettre en place un traitement numérique visant à déterminer le mouvement de l'axe de visée entre deux images consécutives, tel que celui qui est décrit dans le document FR 2 828 315, ou encore dans le document US 5 502 482. L'application d'un tel traitement permet avantageusement d'obtenir de très bonnes performances quant à la correction du bruit spatial.

Ainsi, dans un autre mode de réalisation de la présente invention, la mesure du mouvement défini est réalisée par application d'un traitement numérique des images précédente et suivante.

Dans le contexte de la présente invention, contrairement à ce qui est décrit dans les documents ci-dessus cités, le mouvement de l'axe de visée est contrôlé et connu, et appliqué sur un axe de visée initialement stabilisé dans un référentiel inertiel. Il en résulte une meilleure qualité d'image que ce qui peut être obtenu dans un système qui ne bénéficie pas de stabilisation inertielle.

Ici, on est en mesure de déterminer un mouvement qui permet à la fois de corriger le bruit spatial et de limiter les effets visuels qui peuvent notamment découler de mouvements de l'axe de visée trop rapide par rapport au temps d'intégration des détecteurs, comme des effets de filé par exemple, c'est-à-dire une dégradation traduite par une fonction d'étalement de points (ou encore PSF pour 'Point Spread Function'). En effet, le mouvement qui est imposé à l'axe de visée peut avantageusement être défini en fonction du temps d'intégration des détecteurs utilisés.

Grâce au contrôle de ce mouvement de l'axe de visée, il est possible d'éviter d'introduire une déstabilisation à haute fréquence des images capturées, contrairement à ce qui peut être le cas dans un système de capture d'images à stabilisation numérique comme celui qui est décrit dans le document FR 2 828 315.

Un procédé selon un mode de réalisation de la présente invention peut être notamment très avantageux dans le cas où aucun mouvement n'anime le support de la caméra capturant la série d'images considérée, et où la scène capturée est une scène statique.

L'invention sera également mieux comprise à l'aide des dessins, sur lesquels :

- la figure 1 illustre un système de capture d'images selon un mode de réalisation de la présente invention ;
- la figure 2 illustre un mouvement défini de l'axe de visée relativement à la matrice de détecteurs de flux du dispositif de capture d'images selon un mode de réalisation de la présente invention; et
- la figure 3 illustre une correction de bruit spatial appliquée à une image précédente et une image suivante de la série d'images captées selon un mode de réalisation de la présente invention.

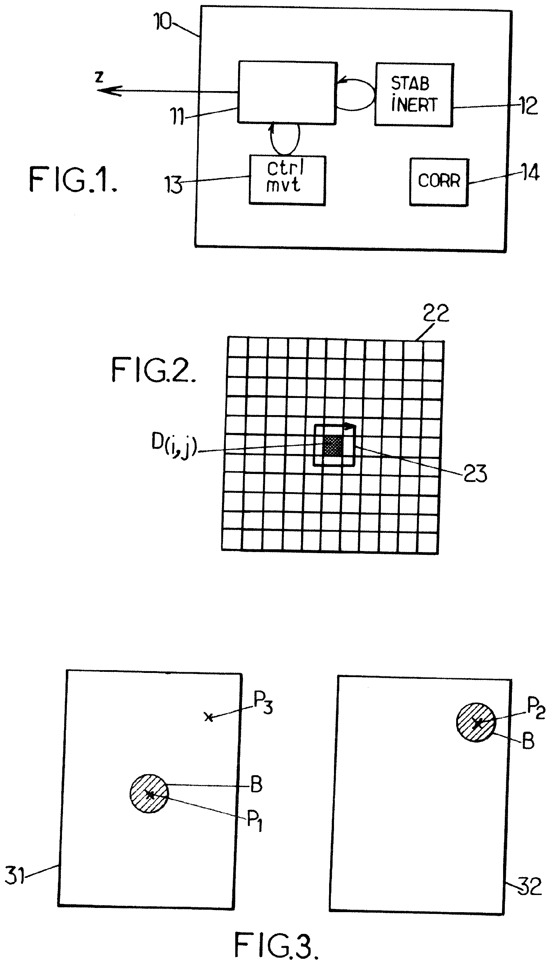

La figure 1 illustre un système de capture d'images selon un mode de réalisation de la présente invention. Un tel système 10 comprend donc un dispositif de capture d'images 11 ayant une matrice de détecteurs de flux orientée selon un axe de visée z. Cet axe de visée a une orientation qui est contrôlée par un module de stabilisation inertielle 12. La présente invention couvre tout type de module de stabilisation qui permet un tel contrôle de cet axe de visée. Dans un mode de réalisation, on peut prévoir qu'un tel module de stabilisation correspond à des gyroscopes inertiels, bien connus de l'homme du métier.

Ainsi, malgré les mouvements qui peuvent animer le support du système de capture d'images, les gyroscopes imposent à l'axe de visée une orientation qui est indépendante des vibrations angulaires et linéaires qui animent le support et qui, de ce fait, permet de bénéficier d'une stabilisation mécanique inertielle et de tous les avantages, bien connus de l'homme du métier, qui en découlent.

La présente invention couvre tout type de support sur lequel peut être posé un tel système de capture d'images. Ce support peut être notamment un homme, ou encore tout type de véhicule aérien, terrestre ou marin.

Le support de ce système de capture 10 peut être en mouvement selon une trajectoire quelconque, ou encore être stationnaire. Lorsque le support est en mouvement, un mode de réalisation de la présente invention peut être appliqué dans le cas où l'orientation de l'axe de visée est maintenue de telle sorte que, malgré le mouvement du support, la même scène est capturée au fil du temps.

Ce système de capture d'images à stabilisation inertielle comprend en outre un module de contrôle de mouvement 13 qui est adapté pour appliquer à l'axe de visée un mouvement défini. La présente invention couvre tout type de module de contrôle de mouvement qui peut appliquer un mouvement défini à l'axe de visée du dispositif de capture d'images. Ce module de contrôle de mouvement 13 peut par exemple correspondre à un mécanisme opto mécanique bien connu de l'homme du métier.

Dans un mode de réalisation de la présente invention, le mouvement défini qu'impose le module de contrôle de mouvement 13 à l'axe de visée z est un mouvement cyclique. Ainsi, l'axe de visée reprend périodiquement les mêmes orientations relatives au support sur lequel est positionné le système de capture d'images 10.

La figure 2 illustre une matrice 22 de détecteurs de flux D(i,j) d'un dispositif de capture d'images dans un système de capture d'images selon un mode de réalisation de la présente invention, où i représente l'indice de lignes de la matrice et j l'indice de colonne de la matrice.

Le mouvement défini appliqué par le module de contrôle de mouvement 13 permet avantageusement à différents détecteurs D(i,j) de la matrice de détecteurs 22, de capter un même point d'une scène capturée par le système de capture d'images.

Ce mouvement défini présente, de préférence, au niveau de la matrice des détecteurs de flux 22, une amplitude de n pixels, n étant un nombre entier supérieur à 2, et inférieur à $n_{max}$, $n_{max}$ étant déterminé de sorte que les images captées au cours d'un cycle présentent une partie majoritairement commune.

Un tel système de capture d'images 10 comprend en outre un module de correction 14 qui est adapté pour corriger un bruit spatial qui est relatif aux détecteurs de flux de la matrice 22 et qui affecte la partie commune d'une image précédente et d'une image suivante, en fonction d'au moins un décalage déterminé entre une valeur d'un pixel de référence $P_1$ dans la partie commune de l'image précédente 31 et une valeur d'un pixel suivant $P_2$ qui représente un même point de la scène que le pixel de référence dans la partie commune de l'image suivante 32.

Le module de contrôle de mouvement 13 peut être adapté pour appliquer un mouvement défini correspondant à un cercle présentant un diamètre d'une valeur supérieure ou égale à 3 pixels au niveau de la matrice de détecteurs de flux.

Le module de contrôle de mouvement 13 peut être adapté pour appliquer un mouvement défini présentant une vitesse qui est déterminée en fonction d'un temps d'intégration des détecteurs de flux du dispositif de capture d'images.

Le module de correction peut être adapté pour corriger successivement, à partir du décalage déterminé, des valeurs de pixels de la partie commune de l'image précédente 31 et de l'image suivante 32, en parcourant une chaîne de pixels comprenant, à partir du pixel de référence $P_1$ dans l'image précédente, des pixels qui se correspondent alternativement dans l'image suivante et dans l'image précédente, un pixel de l'image suivante correspondant à un pixel de l'image précédente lorsque lesdits pixels correspondent à un même point de la scène capturée, et un pixel de l'image précédente correspondant à un pixel de l'image suivante lorsque lesdits pixels correspondent au même détecteur de flux de la matrice de détecteurs.

Le module de correction peut alors en outre être adapté pour déterminer la position du pixel de référence $P_1$ dans la partie commune en fonction du mouvement défini et d'une période de temps écoulée entre les deux images.

Le module de correction peut être adapté pour déterminer la position du pixel suivant $P_2$ dans l'image suivante 32 à partir de la position du pixel de référence $P_1$ dans l'image précédente en fonction d'informations relatives au mouvement défini qui sont fournies par le module de contrôle de mouvement et d'une période de temps écoulée entre les images précédente et suivante.

Le module de correction 14 peut être adapté pour déterminer le mouvement défini par application d'un traitement numérique des images précédente et successive, tel que celui qui est décrit par exemple dans le document FR 2 828 315.

La figure 2 illustre un mouvement défini 23 selon un mode de réalisation de la présente invention relativement à la matrice de détecteurs de flux du dispositif de capture d'images. Ce mouvement défini impose à l'axe de visée, au niveau de la matrice de détecteurs, un déplacement le long d'un carré de pixels ayant des côtés d'une longueur de 3 pixels.

Dans ces conditions, lorsque le mouvement a en outre une vitesse qui permet un déplacement d'un pixel entre deux images consécutivement captées, 8 détecteurs différents de la matrice 22 captent le même point de la scène captée en un cycle du mouvement défini, c'est à dire les pixels positionnés le long de la circonférence du carré illustré en figure 2.

On peut également prévoir d'appliquer un mouvement défini présentant une amplitude supérieure à 3 pixels.

On peut aussi prévoir, qu'au lieu de décrire un carré, au niveau de la matrice des détecteurs 22, l'axe de visée z décrit un cercle de diamètre supérieur ou égal à 3 pixels.

De manière générale, d'une part, on impose à l'axe de visée au niveau de la matrice de détecteurs, une amplitude de mouvement minimale de manière à s'assurer que la correction du bruit spatial est pertinente, car elle est alors réalisée sur un échantillon représentatif de détecteurs de la matrice de détecteurs. Puis, d'autre part, on impose le fait que cette amplitude de mouvement soit inférieure à une valeur maximale qui est déterminée de manière à s'assurer qu'une importante partie commune de la scène captée soit présente sur toutes les images qui sont captées pendant un cycle du mouvement défini appliqué à l'axe de visée.

La figure 3 illustre une correction de bruit spatial appliquée à une image précédente et une image suivante de la série d'images captées.

Deux images successives, une image précédente 31 et une image suivante 32, sont captées selon un mode de réalisation de la présente invention. Un ballon B est représenté au centre de l'image précédente 31, puis, il est représenté dans l'angle droit sur l'image suivante 32, puisque l'axe de visée a été déplacé entre les moments respectifs de capture des deux images successives 31 et 32, selon le mouvement défini imposé par le module de contrôle de mouvement 13.

Les pixels au sein d'une image captée sont référencés dans le référentiel de la matrice de détecteurs 22, qui comprend les détecteurs D(i,j) pour i compris entre 1 et le nombre total de lignes de la matrice 22 et pour j compris entre 1 et le nombre total de colonnes de la matrice 22.

Le détecteur central D(x,y) de la matrice des détecteurs capte un point central du ballon B pour l'image précédente 31. Puis, l'axe de visée z ayant été orienté différemment pour la capture de l'image suivante 32, le point central du ballon B est ensuite capté par un autre détecteur D(x',y') de la matrice des détecteurs.

Théoriquement, les pixels représentant le point central du ballon B respectivement dans l'image précédente 31 et dans l'image suivante 32, devraient être positionnés à la même valeur.

Si tel n'est pas le cas en pratique, il convient d'y remédier.

A cet effet, dans un mode de réalisation de la présente invention, en premier lieu est déterminé le mouvement que tous les détecteurs de la matrice de détecteurs ont subi entre le moment de capture de l'image précédente 31 et celui de l'image suivante 32.

Etant donné que ce mouvement correspond au mouvement défini contrôlé par le module de contrôle de mouvement 13, au sein du système de capture d'images 10, on connaît ce mouvement, c'est-à-dire sa forme, ainsi que sa vitesse.

Par conséquent, il est aisé de déterminer pour un pixel de référence $P_1$ de l'image précédente 31, un pixel suivant correspondant dans l'image suivante 32, c'est-à-dire un pixel qui représente le même point de la scène captée dans l'image suivante 32.

Puis, on calcule un décalage entre la valeur $V(P_1)$ du pixel de référence et la valeur $V(P_2)$ du pixel suivant, et on obtient un décalage qui vérifie l'équation :

$$\delta = V(P_2) - V(P_1)$$

Ce décalage $\delta$ est ensuite utilisé pour corriger la valeur d'un pixel $P_1$ de l'image précédente, qui a été capté par le détecteur D(x,y), en fonction de la valeur du pixel $P_2$. On obtient donc une valeur corrigée $V_{cor}$ du pixel $P_1$ qui vérifie l'équation suivante :

$$V_{cor}(P_1) = V(P_1) + \delta$$

On peut appliquer une telle méthode de correction du bruit spatial sur tous les pixels qui correspondent à la même scène dans les deux images considérées.

Dans un mode de réalisation de la présente invention, on prévoit d'appliquer une propagation de la correction de décalage de la façon suivante. Le décalage $\delta$ tel que déterminé ci-dessus, permet également de corriger la valeur d'un troisième pixel $P_3$ dans l'image précédente 31 correspondant au détecteur D(x',y'). En effet, cette valeur est entachée du même décalage $\delta$ et peut donc être corrigée pour fournir une valeur corrigée

$V_{corr}(P_3)$ qui vérifie l'équation suivante :

$$V_{corr}(P_3) = V(P_3) + \delta$$

Puis, à partir de cette valeur de pixel corrigée, on est en mesure de corriger un quatrième pixel $P_4$ qui a été capté par un détecteur D(x'',y''), qui a capté le même point de la scène que le détecteur D(x',y') pour l'image précédente. En effet, la valeur corrigée de ce pixel $P_4$ vérifie l'équation suivante :

$$V_{corr}(P_4) = V_{corr}(P_3).$$

Puis, on reporte le décalage $\delta$ sur la valeur du pixel de l'image 31 qui a été captée par le détecteur D(x'', y'') de la matrice de détecteurs 22. On peut ainsi parcourir une chaîne de pixels que l'on peut corriger successivement et alternativement entre l'image précédente 31 et l'image suivante 32.

En procédant ainsi, on corrige successivement des valeurs de pixels de la partie commune de l'image précédente 31 et de l'image suivante 32, en parcourant une chaîne de pixels comprenant successivement, à partir d'un pixel de référence dans l'image précédente, des pixels qui se correspondent alternativement dans les images suivante et précédente. Dans une telle chaîne de pixels, un pixel de l'image suivante correspond à un pixel de l'image précédente lorsqu'il représente un même point de la scène captée ; et, un pixel de l'image suivante correspond à un pixel de l'image précédente, lorsque ces deux pixels correspondent au même détecteur de flux dans la matrice de détecteurs 22.

Dans les sections ci-avant, le mouvement d'un pixel depuis une image précédente à une image suivante est déterminé à partir de la connaissance que le système de capture d'images 10 a de ce mouvement mécanique.

Il se peut que cette connaissance du mouvement défini soit insuffisamment précise. Tel est notamment le cas lorsque ce mouvement défini est en pratique entaché de bruit.

Dans un tel cas, le mouvement défini qui est théoriquement appliqué à l'axe de visée z diffère du mouvement qui lui est réellement appliqué. Dans ce contexte, il peut être avantageux de déterminer le mouvement de cet axe de visée au niveau de la matrice des détecteurs, sur la base d'un traitement numérique des images captées.

Un tel procédé de traitement numérique visant à déterminer le mouvement de l'axe de visée entre deux images captées consécutivement est décrit dans le document US 5 502 482 ou encore dans le document FR 2 828 315.

Un mode de réalisation de la présente invention peut avantageusement être mis en oeuvre dans un contexte de capture d'une scène sensiblement statique, car il permet d'améliorer la qualité des images captées, en réduisant le bruit spatial.

**Revendications**

1. Procédé de traitement d'images dans un système de capture (10) d'une série d'images d'une scène comprenant un dispositif de capture d'images (11) ayant une matrice (22) de détecteurs de flux orientée selon un axe de visée (z),
ledit dispositif de capture d'images étant contrôlé par un module de stabilisation inertielle (12) qui stabilise l'axe de visée du dispositif de capture d'images dans un référentiel inertiel et ladite série d'images étant capturée par ledit dispositif de capture d'images dont l'axe de visée est alors animé par un module de contrôle de mouvement (13) d'un mouvement défini, cyclique et présentant sur un cycle, au niveau de la matrice des détecteurs de flux, une amplitude de n pixels, n étant un nombre entier supérieur à 2, et inférieur à $n_{max}$, $n_{max}$ étant déterminé de sorte que les images captées au cours d'un cycle présentent une partie majoritairement commune, ledit procédé de traitement d'images consistant à:

- déterminer le mouvement défini par application d'un traitement numérique des images précédente (31) et suivante (32), lesdites images précédente (31) et suivante (32) étant deux images capturées consécutivement parmi ladite série d'images; et
- corriger un bruit spatial relatif auxdits détecteurs de flux et affectant la partie commune desdites images précédente et suivante, sur la base dudit mouvement défini déterminé par l'application dudit traitement numérique, en fonction d'au moins un décalage déterminé entre une valeur d'un pixel de référence ($P_1$) dans la partie commune de l'image précédente (31) et une valeur d'un pixel ($P_2$) suivant qui représente un même point de ladite scène que ledit pixel de référence dans ladite partie commune de l'image suivante (32).

2. Procédé de traitement d'images selon la revendication 1, **caractérisé en ce que** le mouvement défini est un cercle présentant un diamètre d'une valeur supérieure ou égale à 3 pixels au niveau de la matrice de détecteurs de flux.

3. Procédé de traitement d'images selon la revendication 1 ou 2, **caractérisé en ce que** la vitesse du mouvement défini est déterminée en fonction d'un temps d'intégration des détecteurs de flux de la matrice des détecteurs (22) du dispositif de capture d'images (11).

4. Procédé de traitement d'images selon l'une quelconque des revendications 1 à 3, **caractérisé en ce qu'**on corrige successivement, à partir du décalage déterminé, des valeurs de pixels de la partie commune de l'image précédente (31) et de l'image suivante (32), en parcourant une chaîne de pixels comprenant, à partir du pixel de référence ($P_1$) dans l'image précédente, des pixels qui se correspondent alternativement dans l'image suivante et dans l'image précédente, un pixel de l'image suivante correspondant à un pixel de l'image précédente lorsque lesdits pixels correspondent à un même point de la scène capturée, et un pixel de l'image précédente correspondant à un pixel de l'image suivante lorsque lesdits pixels correspondent au même détecteur de flux de la matrice de détecteurs.

5. Procédé de traitement d'images selon la revendication 4, **caractérisé en ce que** la position du pixel de référence ($P_1$) dans la partie commune est déterminée en fonction du mouvement défini et d'une période de temps écoulée entre lesdites images.

6. Procédé de traitement d'images selon l'une quelconque des revendications précédentes, **caractérisé en ce que** la position du pixel suivant dans l'image suivante est déterminée à partir de la position du pixel de référence dans l'image précédente en fonction de caractéristiques du mouvement défini appliqué à l'axe de visée et d'une période de temps écoulée entre lesdites images.

7. Système de capture d'une série d'images d'une scène comprenant:

- un dispositif de capture d'images (11) ayant une matrice de détecteurs de flux orientée selon un axe de visée,
ledit système de capture comprenant un module de stabilisation inertielle (12) qui stabilise l'axe de visée du dispositif de capture d'images dans un référentiel inertiel et un module de contrôle de mouvement (13) qui est adapté pour appliquer à l'axe de visée un mouvement défini, cyclique et présentant sur un cycle au niveau de la matrice des détecteurs de flux une amplitude de n pixels, n étant un nombre entier supérieur à 2, et inférieur à $n_{max}$, $n_{max}$ étant déterminé de sorte que les images captées au cours d'un cycle présentent une partie majoritairement commune;
- un module de correction (14) adapté pour:

- déterminer le mouvement défini par application d'un traitement numérique des images précédente (31) et suivante (32), lesdites images précédente (31) et suivante (32) étant deux images capturées consécutivement parmi ladite série d'images; et

- corriger un bruit spatial relatifs auxdits détecteurs de flux et affectant la partie commune des images précédente et suivante, sur la base dudit mouvement défini déterminé par l'application dudit traitement numérique, en fonction d'au moins un décalage déterminé entre une valeur d'un pixel de référence ($P_1$) dans la partie commune d'une image précédente (31) et une valeur d'un pixel suivant ($P_2$) qui représente un même point de ladite scène que ledit pixel de référence dans ladite partie commune d'une image suivante (32).

8. Système de traitement d'images selon la revendication 7, **caractérisé en ce que** le module de contrôle de mouvement (13) est adapté pour appliquer un mouvement défini correspondant à un cercle présentant un diamètre d'une valeur supérieure ou égale à 3 pixels au niveau de la matrice de détecteurs de flux.

9. Système de traitement d'images selon la revendication 7 ou 8, **caractérisé en ce que** le module de contrôle de mouvement (13) est adapté pour appliquer un mouvement défini présentant une vitesse qui est déterminée en fonction d'un temps d'intégration des détecteurs de flux de la matrice des détecteurs (22) du dispositif de capture d'images (11).

10. Système de traitement d'images selon l'une quelconque des revendications 7 à 9, **caractérisé en ce que** le module de correction est adapté pour corriger successivement, à partir du décalage déterminé, des valeurs de pixels de la partie commune de l'image précédente (31) et de l'image suivante (32), en parcourant une chaîne de pixels comprenant, à partir du pixel de référence ($P_1$) dans l'image précédente, des pixels qui se correspondent alternativement dans l'image suivante et dans l'image précédente, un pixel de l'image suivante correspondant à un pixel de l'image précédente lorsque lesdits pixels correspondent à un même point de la scène capturée, et un pixel de l'image précédente correspondant à un pixel de l'image suivante lorsque lesdits pixels correspondent au même détecteur de flux de la matrice de détecteurs.

11. Système de traitement d'images selon la revendication 10, **caractérisé en ce que** le module de correction est en outre adapté pour déterminer la position du pixel de référence ($P_1$) dans la partie commune en fonction du mouvement défini et d'une période de temps écoulée entre lesdites images.

12. Système de traitement d'images selon l'une quelconque des revendications 7 à 11, caractérisé en ce le module de correction est adapté pour déterminer la position du pixel suivant dans l'image suivante (32) à partir de la position du pixel de référence dans l'image précédente en fonction d'informations relatives au mouvement défini qui sont fournies par le module de contrôle de mouvement et d'une période de temps écoulée entre lesdites images précédente et suivante.

13. Programme d'ordinateur destiné à être installé dans un système de traitement d'image (10) selon l'une quelconque des revendications 7 à 12, comprenant des instructions aptes à mettre en oeuvre le procédé selon l'une quelconque des revendications 1 à 6, lors d'une exécution du programme par des moyens de traitement du système de traitement d'image.

**Patentansprüche**

1. Verfahren zur Verarbeitung von Bildern einer Serie von Bildern einer Szene in einem Aufnahmesystem (10), umfassend eine Bildaufnahmevorrichtung (11) mit einer Matrix (22) von Flussdetektoren, die in einer Visierachse (z) ausgerichtet ist, wobei die Bildaufnahmevorrichtung von einem Trägheitsstabilisierungsmodul (12) gesteuert wird, das die Visierachse der Bildaufnahmevorrichtung in einem Trägheitsreferenzsystem stabilisiert, und wobei die Serie von Bildern von der Bildaufnahmevorrichtung aufgenommen wird, deren Visierachse dann von einem Bewegungssteuermodul mit (13) einer definierten Bewegung angeregt wird, die zyklisch ist und in einem Zyklus, auf der Ebene der Matrix von Flussdetektoren, eine Amplitude von n Pixeln aufweist, wobei n eine ganze Zahl größer als 2, und kleiner als $n_{max}$ ist, wobei $n_{max}$ derart bestimmt wird, dass die während eines Zyklus aufgenommenen Bilder einen mehrheitlich gemeinsamen Teil aufweisen, wobei das Verfahren zur Verarbeitung von Bildern besteht aus:

- Bestimmen der definierten Bewegung durch Anwenden einer digitalen Verarbeitung eines vorhergehenden (31) und nachfolgenden (32) Bilds, wobei das vorhergehende (31) und das nachfolgende (32) Bild zwei Bilder sind, die konsekutiv in der Serie von Bildern aufgenommen wurden; und

- Korrigieren eines räumlichen Rauschens, das die Flussdetektoren betrifft und den gemeinsamen Teil des vorhergehenden und nachfolgenden Bilds beeinträchtigt, auf der Basis der definierten Bewegung, die durch das Anwenden der digitalen Verarbeitung bestimmt wird, als Funktion mindestens einer bestimmten Verschiebung zwischen einem Wert eines Referenzpi-

xels (P$_1$) im gemeinsamen Teil des vorhergehenden Bilds (31) und einem Wert eines nachfolgenden Pixels (P$_2$), das denselben Punkt der Szene darstellt wie das Referenzpixel im gemeinsamen Teil des nachfolgenden Bilds (32).

2. Verfahren zur Verarbeitung von Bildern nach Anspruch 1,
**dadurch gekennzeichnet, dass** die definierte Bewegung ein Kreis ist, der einen Durchmesser mit einem Wert größer oder gleich 3 Pixel auf der Ebene der Matrix von Flussdetektoren aufweist.

3. Verfahren zur Verarbeitung von Bildern nach Anspruch 1 oder 2,
**dadurch gekennzeichnet, dass** die Geschwindigkeit der definierten Bewegung als Funktion einer Integrationszeit der Flussdetektoren der Matrix (22) von Detektoren der Bildaufnahmevorrichtung (11) bestimmt wird.

4. Verfahren zur Verarbeitung von Bildern nach einem der Ansprüche 1 bis 3,
**dadurch gekennzeichnet, dass** nacheinander, aus der bestimmten Verschiebung, Werte von Pixeln des gemeinsamen Teils des vorhergehenden Bilds (31) und des nachfolgenden Bilds (32) korrigiert werden, indem eine Kette von Pixeln durchlaufen wird, umfassend, ausgehend von dem Referenzpixel (P$_1$) im vorhergehenden Bild, Pixel, die einander abwechselnd im nachfolgenden Bild und im vorhergehenden Bild entsprechen, wobei ein Pixel des nachfolgenden Bilds einem Pixel des vorhergehenden Bilds entspricht, wenn die Pixel demselben Punkt der aufgenommenen Szene entsprechen, und ein Pixel des vorhergehenden Bilds einem Pixel des nachfolgenden Bilds entspricht, wenn die Pixel demselben Flussdetektor der Matrix von Detektoren entsprechen.

5. Verfahren zur Verarbeitung von Bildern nach Anspruch 4,
**dadurch gekennzeichnet, dass** die Position des Referenzpixels (P$_1$) im gemeinsamen Teil als Funktion der definierten Bewegung und einer zwischen den Bildern verstrichenen Zeitperiode bestimmt wird.

6. Verfahren zur Verarbeitung von Bildern nach einem der vorhergehenden Ansprüche,
**dadurch gekennzeichnet, dass** die Position des nachfolgenden Pixels im nachfolgenden Bild aus der Position des Referenzpixels im vorhergehenden Bild als Funktion von Charakteristiken der definierten Bewegung, die auf die Visierachse angewendet wird, und einer zwischen den Bildern verstrichenen Zeitperiode bestimmt wird.

7. System zur Aufnahme einer Serie von Bildern einer Szene, umfassend:

- eine Bildaufnahmevorrichtung (11) mit einer Matrix von Flussdetektoren, die in einer Visierachse ausgerichtet ist,

wobei das Aufnahmesystem umfasst: ein Trägheitsstabilisierungsmodul (12), das die Visierachse der Bildaufnahmevorrichtung in einem Trägheitsreferenzsystem stabilisiert, und ein Bewegungssteuermodul (13), das geeignet ist, auf die Visierachse eine definierte Bewegung anzuwenden, die zyklisch ist und in einem Zyklus, auf der Ebene der Matrix von Flussdetektoren, eine Amplitude von n Pixeln aufweist, wobei n eine ganze Zahl größer als 2, und kleiner als n$_{max}$ ist, wobei n$_{max}$ derart bestimmt wird, dass die während eines Zyklus aufgenommenen Bilder einen mehrheitlich gemeinsamen Teil aufweisen;

- ein Korrekturmodul (14), das geeignet ist:

die definierte Bewegung durch Anwenden einer digitalen Verarbeitung eines vorhergehenden (31) und nachfolgenden (32) Bilds zu bestimmen, wobei das vorhergehende (31) und nachfolgende (32) Bild zwei Bilder sind, die konsekutiv in der Serie von Bildern aufgenommen werden; und
ein räumliches Rauschen zu korrigieren, das die Flussdetektoren betrifft und den gemeinsamen Teil des vorhergehenden und nachfolgenden Bilds beeinträchtigt, auf der Basis der definierten Bewegung, die durch das Anwenden der digitalen Verarbeitung bestimmt wird, als Funktion mindestens einer bestimmten Verschiebung zwischen einem Wert eines Referenzpixels (P$_1$) im gemeinsamen Teil eines vorhergehenden Bilds (31) und einem Wert eines nachfolgenden Pixels (P$_2$), das denselben Punkt der Szene darstellt wie das Referenzpixel im gemeinsamen Teil eines nachfolgenden Bilds (32).

8. System zur Verarbeitung von Bildern nach Anspruch 7,
**dadurch gekennzeichnet, dass** das Bewegungssteuermodul (13) geeignet ist, eine definierte Bewegung anzuwenden, die einem Kreis entspricht, der einen Durchmesser mit einem Wert größer oder gleich 3 Pixel auf der Ebene der Matrix von Flussdetektoren aufweist.

9. System zur Verarbeitung von Bildern nach Anspruch 7 oder 8,
**dadurch gekennzeichnet, dass** das Bewegungssteuermodul (13) geeignet ist, eine definierte Bewegung anzuwenden, die eine Geschwindigkeit aufweist, welche als Funktion einer Integrationszeit der Flussdetektoren der Matrix (22) von Detektoren der Bildaufnahmevorrichtung (11) bestimmt wird.

10. System zur Verarbeitung von Bildern nach einem der Ansprüche 7 bis 9,
**dadurch gekennzeichnet, dass** das Korrekturmodul geeignet ist, nacheinander, aus der bestimmten Verschiebung, Werte von Pixeln des gemeinsamen Teils des vorhergehenden Bilds (31) und des nachfolgenden Bilds (32) zu korrigieren, indem eine Kette von Pixeln durchlaufen wird, umfassend, ausgehend von dem Referenzpixel ($P_1$) im vorhergehenden Bild, Pixel, die einander abwechselnd im nachfolgenden Bild und im vorhergehenden Bild entsprechen, wobei ein Pixel des nachfolgenden Bilds einem Pixel des vorhergehenden Bilds entspricht, wenn die Pixel demselben Punkt der aufgenommenen Szene entsprechen, und ein Pixel des vorhergehenden Bilds einem Pixel des nachfolgenden Bilds entspricht, wenn die Pixel demselben Flussdetektor der Matrix von Detektoren entsprechen.

11. System zur Verarbeitung von Bildern nach Anspruch 10,
**dadurch gekennzeichnet, dass** das Korrekturmodul ferner geeignet ist, die Position des Referenzpixels ($P_1$) im gemeinsamen Teil als Funktion der definierten Bewegung und einer zwischen den Bildern verstrichenen Zeitperiode zu bestimmen.

12. System zur Verarbeitung von Bildern nach einem der Ansprüche 7 bis 11,
**dadurch gekennzeichnet, dass** das Korrekturmodul geeignet ist, die Position des nachfolgenden Pixels im nachfolgenden Bild (32) aus der Position des Referenzpixels im vorhergehenden Bild als Funktion von Informationen über die definierte Bewegung, die vom Bewegungssteuermodul geliefert werden, und einer Zeitperiode, die zwischen dem vorhergehenden und nachfolgenden Bild verstrichen ist, zu bestimmen.

13. Computerprogramm, welches dazu bestimmt ist, in einem Bildverarbeitungssystem (10) nach einem der Ansprüche 7 bis 12 installiert zu werden, umfassend Instruktionen, die geeignet sind, das Verfahren nach einem der Ansprüche 1 bis 6 bei einer Ausführung des Programms durch Verarbeitungsmittel des Bildverarbeitungssystems durchzuführen.

**Claims**

1. Method for processing images in a system (10) for capturing a series of images of a scene comprising an image capture device (11) having a matrix (22) of flux sensors oriented along a line of sight (z), said image capture device being controlled by an inertial stabilization module (12) which stabilizes the line of sight of the image capture device in an inertial reference frame, and
said series of images being captured by said image capture device whose line of sight is then driven by a motion control module (13) in a defined cyclical motion and exhibiting, over a cycle, at the level of the matrix of the flux sensors, an amplitude of n pixels, n being an integer number greater than 2 and less than $n_{max}$, $n_{max}$ being determined such that the images captured during a cycle exhibit a mostly common part, said image processing method consisting in:

- determining the defined motion by the application of a digital processing of the preceding (31) and next (32) images, said preceding (31) and next (32) images being two images captured consecutively out of said series of images; and
- correcting a spatial noise relating to said flux sensors and affecting the common part of said preceding and next images, on the basis of said defined motion determined by the application of said digital processing, as a function of at least one determined shift between a value of a reference pixel ($P_1$) in the common part of the preceding image (31) and a value of a next pixel ($P_2$) which represents one and the same point of said scene as said reference pixel in said common part of the next image (32).

2. Image processing method according to Claim 1, **characterized in that** the defined motion is a circle having a diameter of a value greater than or equal to 3 pixels at the level of the matrix of flux sensors.

3. Image processing method according to Claim 1 or 2, **characterized in that** the speed of the defined motion is determined as a function of an integration time of the flux sensors of the matrix of the sensors (22) of the image capture device (11).

4. Image processing method according to any one of Claims 1 to 3, **characterized in that** there are corrected in succession, from the determined shift, values of pixels of the common part of the preceding image (31) and of the next image (32), by scanning a chain of pixels comprising, from the reference pixel ($P_1$) in the preceding image, pixels which mutually correspond to one another alternately in the next image and in the preceding image, a pixel of the next image corresponding to a pixel of the preceding image when said pixels correspond to one and the same point of the captured scene, and a pixel of the preceding image corresponding to a pixel of the next image when said pixels correspond to the same flux sensor of the matrix of sensors.

5. Image processing method according to Claim 4, **characterized in that** the position of the reference pixel ($P_1$) in the common part is determined as a function of the defined motion and of a time period elapsed between said images.

6. Image processing method according to any one of the preceding claims, **characterized in that** the position of the next pixel in the next image is determined from the position of the reference pixel in the preceding image as a function of characteristics of the defined motion applied to the line of sight and of a time period elapsed between said images.

7. System for capturing a series of images of a scene comprising:

- an image capture device (11) having a matrix of flux sensors oriented along a line of sight, said capture system comprising an inertial stabilization module (12) which stabilizes the line of sight of the image capture device in an inertial reference frame, and a motion control module (13) which is suitable for applying to the line of sight a defined cyclical motion and exhibiting, over a cycle, at the level of the matrix of the flux sensors, an amplitude of n pixels, n being an integer number greater than 2 and less than $n_{max}$, $n_{max}$ being determined such that the images captured during a cycle exhibit a mostly common part;
- a correction module (14) suitable for:
- determining the defined motion by application of a digital processing of the preceding (31) and next (32) images, said preceding (31) and next (32) images being two images captured consecutively out of said series of images; and
- correcting a spatial noise relating to said flux sensors and affecting the common part of the preceding and next images, on the basis of said defined motion determined by the application of said digital processing, as a function of at least one determined shift between a value of a reference pixel ($P_1$) in the common part of a preceding image (31) and a value of a next pixel ($P_2$) which represents one and the same point of said scene as said reference pixel in said common part of a next image (32).

8. Image processing system according to Claim 7, **characterized in that** the motion control module (13) is suitable for applying a defined motion corresponding to a circle having a diameter of a value greater than or equal to 3 pixels at the level of the matrix of flux sensors.

9. Image processing system according to Claim 7 or 8, **characterized in that** the motion control module (13) is suitable for applying a defined motion exhibiting a speed which is determined as a function of an integration time of the flux sensors of the matrix of the sensors (22) of the image capture device (11).

10. Image processing system according to any one of Claims 7 to 9, **characterized in that** the correction module is suitable for correcting in succession, from the determined shift, values of pixels of the common part of the preceding image (31) and of the next image (32), by scanning a chain of pixels comprising, from the reference pixel ($P_1$) in the preceding image, pixels which mutually correspond to one another alternately in the next image and in the preceding image, a pixel of the next image corresponding to a pixel of the preceding image when said pixels correspond to one and the same point of the captured scene, and a pixel of the preceding image corresponding to a pixel of the next image when said pixels correspond to the same flux sensor of the matrix of sensors.

11. Image processing system according to Claim 10, **characterized in that** the correction module is also suitable for determining the position of the reference pixel ($P_1$) in the common part as a function of the defined motion and of a time period elapsed between said images.

12. Image processing system according to any one of Claims 7 to 11, **characterized in that** the correction module is suitable for determining the position of the next pixel in the next image (32) from the position of the reference pixel in the preceding image as a function of information relating to the defined motion which is supplied by the motion control module and of a time period elapsed between said preceding and next images.

13. Computer program intended to be installed in an image processing system (10) according to any one of Claims 7 to 12, comprising instructions capable of implementing the method according to any one of Claims 1 to 6, when the program is run by processing means of the image processing system.

FIG.1.

FIG.2.

FIG.3.

**EP 1 927 953 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2756129
- FR 2828315

- US 5502482 A